# EUROPEAN PATENT APPLICATION

(11) **EP 3 517 992 A1**
(43) Date of publication of application: **31.07.2019**
(21) Application number: 17853213.1
(22) Date of filing: 25.09.2017
(51) Int. Cl.: G01S 5/14, G01S 11/02

(54) **POSITION CALCULATING METHOD, DISTANCE CALCULATING METHOD, AND BEACON**

(30) Priority: 26.09.2016 JP 2016186733
(71) Applicant: Where, Inc., Tokyo 102-0094 (JP); NTT Data Corporation, Tokyo 135-6033 (JP); Kyowa Exeo Corporation, Tokyo 150-0002 (JP)
(72) Inventor: MARUTA, Hajime, Tokyo 102-0094 (JP); TORIGOE, Naoya, Tokyo 135-6033 (JP); FUJISHIMA, Shingo, Tokyo 150-0002 (JP)
(74) Representative: Vigand, Philippe
(86) International application number: PCT/JP2017/034590
(87) International publication number: WO 2018/056446

(57) **Abstract**

In a position calculating method performed by a system including beacons, and a control device capable of communicating with the beacons: at least one of the plurality of beacons receives, from a terminal present in the radio wave reaching distance of the beacon, a first signal including terminal identification information identifying the terminal, measures the reception strength of the received signal, and transmits a second signal which includes the terminal identification information, the reception strength and beacon identification information identifying the beacon; and the control device receives the second signal from one of the plurality of beacons, and, on the basis of the position information of the beacon corresponding to the beacon identification information included in the second signal, and on the basis of the reception strength included in the second signal, calculates the position of the terminal corresponding to the terminal identification information included in the second signal.

## Description

### TECHNICAL FIELD

The present invention pertains to a position calculating method, a distance calculating method, and a beacon.

### BACKGROUND ART

There exists a beacon (radiophare) to notify a receiver of various items of information instanced by positions by emitting electromagnetic waves. Some of the beacons are configured to transmit the information toward mobile computers. For example, some of the beacons for the mobile computers utilize Bluetooth (registered trademark), and receive pieces of identifying information from a plurality of transmitters, whereby computers on a receiving side are enabled to know self-positions.

With respect to the beacon configured to transmit the information toward a moving object exemplified by an automobile equipped with a receiver, such an information communication system is proposed that a wireless communication monitoring device transmits transmission level information of the beacon to the beacon, thereby adjusting a transmission level of the beacon.

### [Documents of Prior Arts]

### [Patent Documents]

[Patent Document 1] Japanese Patent Application Laid-Open Publication No. 2014-25910
[Patent Document 2] Japanese Patent Publication No. 5792412 [Patent Document 3] Japanese Unexamined Patent Application Publication No. 2014-529947

### SUMMARY

### [Problems to be solved by the Invention]

It is difficult to accurately grasp positions of a person and an object when a communication environment is not sufficiently set up in a space instanced by a tunnel and an underground street. A considerable amount of cost is required for setting up the communication environment instanced by a PHS (Personal Handy-phone System) in order to grasp the position in the space, i.e. the tunnel or the underground street. Such being the case, it is requested to accurately grasp the positions of the person and the object and a distance in a simple manner.

The present invention aims at providing a technology capable of grasping positions of a person and an object.

### [Means for solving the Problems]

The following means is adopted for solving the problems.

To be specific, according to a first aspect, there is provided a position calculating method in a system including: a plurality of beacons enabled to perform mutual communications within a predetermined radio wave reachable distance and transmitting radiophares containing self-identifying information, each of the plural beacons being disposed within the radio wave reachable distance of at least one of other beacons; and a control device enabled to perform the communications with at least one of the plural beacons, the method including:
causing at least one of the plural beacons to receive a first signal containing terminal identifying information for identifying a terminal from the terminal existing within the radio wave reachable distance of the beacon, to measure a reception strength of the received signal, and to transmit a second signal containing the terminal identifying information, the reception strength, and beacon identifying information for identifying the beacon; and
causing the control device to receive the second signal from one of the plural beacons, and to calculate the position of the terminal associated with the terminal; identifying information contained in the second signal, based on positional information of the beacon associated with the beacon identifying information contained in the second signal and a reception strength contained in the second signal.

According to the first aspect, the terminal transmits the signal containing the terminal identifying information to the beacons in a space where the plurality of beacons exists, thereby enabling the position of the terminal to be calculated.

Specifically, according to a second aspect, there is provided a distance calculating method in a system including: a plurality of beacons enabled to perform mutual communications within a predetermined radio wave reachable distance and transmitting radiophares containing self-identifying information, the respective plural beacons being aligned at a predetermined interval within the radio wave reachable distance of at least one of other beacons, the method including:
causing at least one of the plural beacons to receive a first signal containing terminal identifying information for identifying a first terminal from the first terminal existing within the radio wave reachable distance of the beacon, and to transmit a second signal containing the terminal identifying information and a hop count indicating a number of transfers made between the beacons;
causing one of the plural beacons to transmit, when receiving the second signal, the second signal as a renewed second signal by adding "1" to the hop count contained in the second signal; and
causing a second terminal existing within the radio wave reachable distance of one of the plural beacons to calculate, when receiving the second signal, a distance to the first terminal associated with the terminal identifying information contained in the second signal by multiplying the hop count contained in the second signal by the predetermined interval.

According to the second aspect, in the space where the plurality of beacons is aligned, the terminal transmits the signal containing the terminal identifying information to the beacon, then transfers the signal while adding "1" to the hop count, and is thereby enabled to calculate the distance to another terminal from this terminal.

The aspects of the disclosure may also be attained in such a way that an information processing apparatus runs programs. In other words, a configuration of the disclosure may be specified as a program for making the information processing apparatus execute processes to be executed the respective means in the aspects described above, or as a non-transitory computer readable recording medium recorded with the program. The configuration of the disclosure may also be specified as a method by which the information processing apparatus executes the processes to be executed by the respective means. The configuration of the disclosure may further be specified as a system including the information processing apparatus that executes the processes to be executed by the respective means.

### [Effect of the Invention]

According to the present invention, it is possible to grasp positions of persons and objects.

### BRIEF DESCRIPTION OF THE DRAWINGS

FIG. 1 is a diagram illustrating an example of a configuration of a system according to an embodiment.
FIG. 2 is a diagram illustrating an example of function blocks of a beacon 10.
FIG. 3 is a diagram illustrating an example of function blocks of a control device 20.
FIG. 4 is a diagram illustrating an example of function blocks of a terminal 30.
FIG. 5 is a diagram illustrating an example of function blocks of an information providing server 40.
FIG. 6 is a diagram illustrating an example of function blocks of a terminal 50.
FIG. 7 is a diagram illustrating an example of function blocks of a terminal 50.
FIG. 8 is a diagram illustrating an example of a hardware configuration of an information processing apparatus.
FIG. 9 is a sequence chart illustrating an example of an operation sequence when a server calculates a position of the terminal existing in the vicinity of any one of the beacons configuring a beacon mesh.
FIG. 10 is a diagram illustrating an example of a configuration of a system according to a modified example 1.
FIG. 11 is a sequence chart illustrating an example of an operation sequence when the terminal carried by a user calculates a position of the terminal mounted in a train within a tunnel in which the beacons are installed.
FIG. 12 is a diagram illustrating an example of a configuration of a system according to a modified example 2.

### EMBODIMENTS

### [Mode for Carrying out the Invention]

An embodiment of the present invention will hereinafter be described with reference to the drawings. A configuration of the embodiment is an exemplification, and a configuration of the invention is not limited to a specific configuration of the embodiment of the disclosure. A specific configuration corresponding to the embodiment may be properly adopted on the occasion of carrying out the invention.

### [Embodiment]

### <System Configuration>

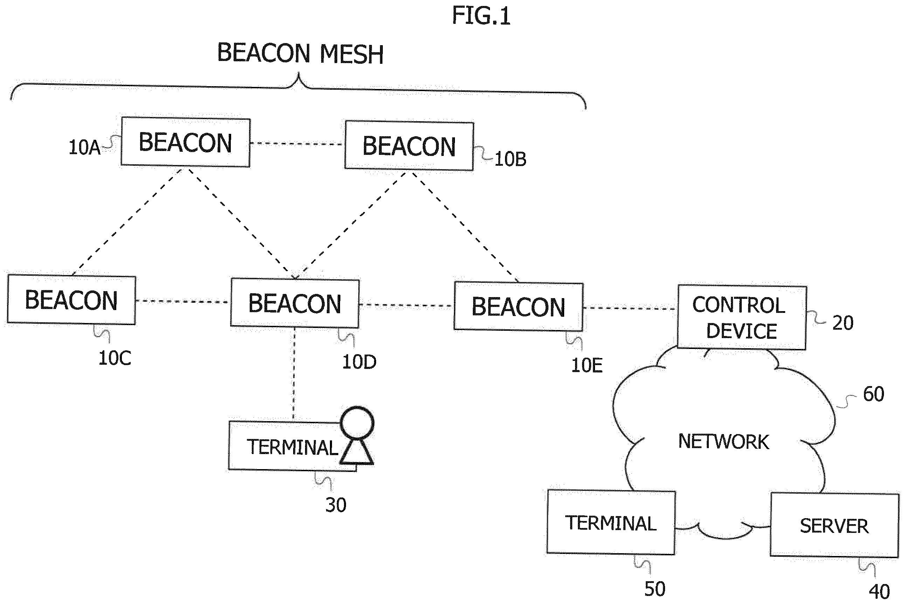

FIG. 1 is a diagram illustrating an example of a configuration of a system according to the embodiment. Note that a radiophare transmitted and received for measuring a position and other equivalents and a transmitting device of the radiophare will be each called a "beacon" in the embodiment. The system according to the embodiment includes beacons 10 (beacons 10A through 10E inFIG. 1), a control device 20, a terminal 30, a server 40, and a terminal 50. The terminal 30 exists in a receivable position of a signal from any one of the beacons 10. The terminal 30 is, e.g., carried by a user or attached to a predetermined object. The control device 20, the server 40 and the terminal 50 are interconnected via a network 60 instanced by the Internet. The terminal 30 may also be connected to the network 60. The beacons 10A through 10E configure a multi-hop wireless network.

The beacon 10 transmits a radiophare that contains identifying information and a transmission day/time. The beacon 10 according to the embodiment has a function of performing mutual communications with other beacons 10 installed within a reachable distance of radio waves, thus configuring the multi-hop wireless network on the whole. Each of the plural beacons is to be disposed within the reachable distance of the radio waves of at least one of other beacons. The beacon 10 receives the identifying information of the terminal 30 from this terminal 30. The beacon 10 transmits, to other beacons 10, the identifying information of the beacon 10 itself together with the identifying information received from the terminal 30, a reception strength of the signal transmitted from the terminal 30 and other equivalent items . Note that the plurality of beacons enabled to perform the communications with each other is generically called a "beacon mesh". FIG. 1 depicts the five beacons 10, and a number of the beacons 10 is not, however, limited to "5". The beacon 10 includes, e.g., a microcontroller and an antenna, and attains a variety of functions by getting these components to cooperate with each other.

The control device 20 is a device that unitarily controls operations of the plurality of beacons 10. The control device 20 transmits, to the peripheral beacons 10, specifying information containing the identifying information for identifying any one of the plurality of beacons 10 and predetermined items of information. On the other hand, the beacon 10 relays the received specifying information to the peripheral beacons 10 and, when receiving the specifying information containing the identifying information that identifies the beacon 10 itself, executes a predetermined process based on the specifying information. The control device 20 operates as a gateway for establishing a connection between the beacon mesh and the network 60.

The terminal 30 receives the radiophare from the beacon 10, and specifies a position of the beacon 10 itself. The terminal 30 transmits the identifying information for identifying the terminal 30 itself to the beacon 10. Note that the server 40 calculates the position in the embodiment, and the terminal 30 may, however, perform this calculation. FIG. 1 illustrates one terminal 30, and a number of the terminals 30 is not, however, limited to "1". The terminal 30 may have a function as the beacon 10. For example, the terminal 30 may function as one of the beacons 10 within the beacon mesh.

The server 40 acquires, from the terminal 30 via the beacon mesh, plural sets of data of the identifying information of the beacons 10 and the transmission day/time contained in the radiophares, the reception day/time of the radiophares in the terminal 30 and the identifying information of the terminal 30, and calculates positional information of the terminal 30 by, e.g., tri-circle positioning. The server 40 outputs the calculated positional information via the network 60 to the terminal 50 and other equivalent terminals . Note that the server 40 may also output information corresponding to the position of the terminal 30.

The terminal 50 is connected to the network 60 and receives the positional information and other equivalent information of the terminal 30 from the server 40. FIG. 1 illustrates one terminal 50, and a number of the terminals 50 is not, however, limited to "1".

### <Functional Configuration of Beacon>

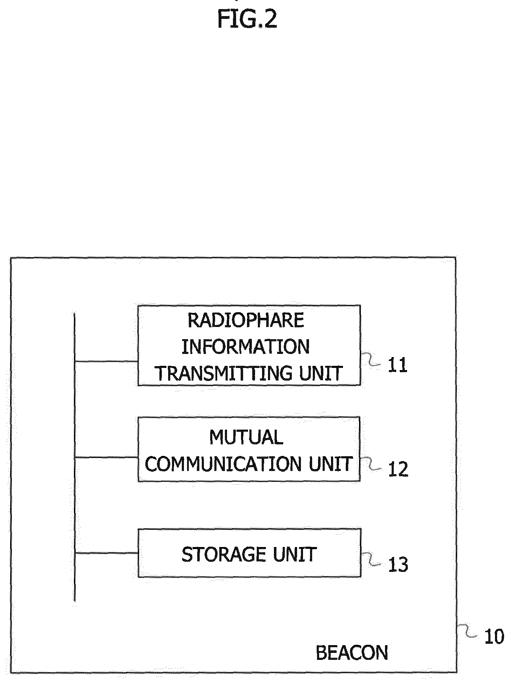

FIG. 2 is a diagram illustrating an example of function blocks of the beacon 10 according to the embodiment. Note that the plurality of beacons 10 is installed at an interval equal to or shorter than a predetermined radio wave reachable distance enabling the mutual communications between the beacons within a station yard of a subway and other equivalents, an underground street, a building, a tunnel and other equivalent structures. The beacons 10 are to be installed at the interval of, e.g., about 10 m corresponding to an installing location. The beacon 10 includes a radiophare information transmitting unit 11, a mutual communication unit 12 and a storage unit 13.

The radiophare information transmitting unit 11 transmits, based on the information retained in the storage unit 13, the radiophare containing the identifying information for identifying the beacon 10, and thus gives a proximity notification to the device on a receiving side. The radiophare may contain day/time information and other equivalent information indicating the transmission time. To be specific, it is feasible to utilize a technology exemplified by BLE (Bluetooth Low Energy), and a broadcast communication of the radiophare may be performed.

The mutual communication unit 12 transmits and receives the information bidirectionally to and from other beacons 10, the terminal 30 and the control device 20. For example, the mutual communications may be performed based on a profile instanced by GATT (Generic Attribute profile) of BLE. The mutual communication unit 12 may also perform connection-oriented communications. The mutual communication unit 12, when receiving the specifying information containing pieces of identifying information of other beacons 10, relays the specifying information to the peripheral beacons 10. On the other hand, when receiving the specifying information containing the identifying information identifying the mutual communication unit 12 itself, the mutual communication unit 12 stores the specifying information in the storage unit 13, and executes a predetermined process based on the specifying information. The mutual communication unit 12 receives from the terminal 30 a signal containing the terminal ID of the terminal 30. The mutual communication unit 12 measures reception strength of the received signal. The mutual communication unit 12 stores information contained in the received signal and the signal reception strength in the storage unit 13 by being associated with each other.

The mutual communication unit 12 may, in response to a request given from the control device 20, give a response of the information retained in the storage unit 13 to the control device 20 via the beacon mesh network. Unique identifying information may be previously allocated to the information instanced by the specifying information transmitted and received between the beacons 10. Hereat, the mutual communication unit 12 stores the identifying information of the once-transferred information in the storage unit 13, then checks, when transferring the information, whether the identifying information of the information concerned is coincident with the identifying information of the information transferred in the past to the storage unit 13, and may not transfer the information concerned when being the information transferred in the past. It is thereby feasible to avoid a continuous transfer of the same information within the beacon mesh.

The storage unit 13, which is a nonvolatile memory, is attained by, e.g., an EEPROM (Electrically Erasable Programmable Read-Only Memory) instanced by a flash memory possessed by the microprocessor. The storage unit 13 stores the identifying information of the predetermined beacons 10 and a setting value of strength of the radio waves when the radiophare information transmitting unit 11 transmits the radiophare. The storage unit 13 stores the information contained in the received signal and the signal reception strength.

### <Functional Configuration of Control Device>

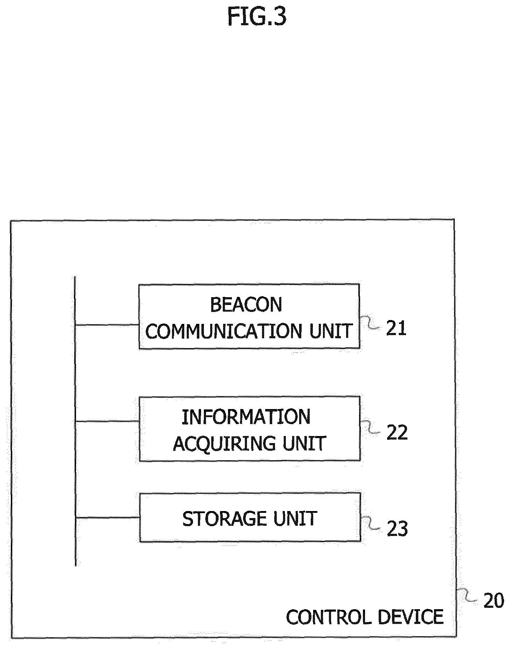

FIG. 3 is a diagram illustrating an example of function blocks of the control device 20 according to the embodiment. The control device 20, which is, e.g. , a general type of computer, includes a beacon communication unit 21, an information acquiring unit 22 and a storage unit 23. The beacon communication unit 21 performs the bidirectional communications with the beacon 10. To be specific, the beacon communication unit 21 transmits the specifying information described above, and receives alive information from the beacon 10 and the information retained by the beacon 10. The control device 20 may also be connected to one beacon 10 by a cable and other equivalent methods in a communication-enabled manner.

The information acquiring unit 22 acquires predetermined information from an unillustrated device via the network 60 exemplified by the Internet and a private line. The information acquiring unit 22 causes, based on an input from the user operating the control device 20, the beacon communication unit 21 to transmit the specifying information and to change settings of the beacon 10. The information acquiring unit 22 may acquire the information from the respective beacons 10. The beacon 10 may also send the same specifying information only once by the broadcast communication in such a way that the specifying information contains pieces of identifying information associated with all of the beacons 10. The specifying information is configured to contain a hop count indicating how many times the specifying information is transferred on the beacon mesh network, then the beacon 10 increments the hop count each time setting change information is transferred, and the specifying information transferred between the beacons 10 by a predetermined number of times may be deleted from on the beacon mesh.

The storage unit 23 is attained by, e.g., an HDD (Hard Disk Drive), an SSD (Solid State Drive), the flash memory and other equivalent storages. The storage unit 23 stores pieces of positional information indicating the installing locations of the plurality of beacons 10, operation settings and other equivalent items by being associated with the identifying information (beacon IDs) of the respective beacons.

### <Functional Configuration of Terminal>

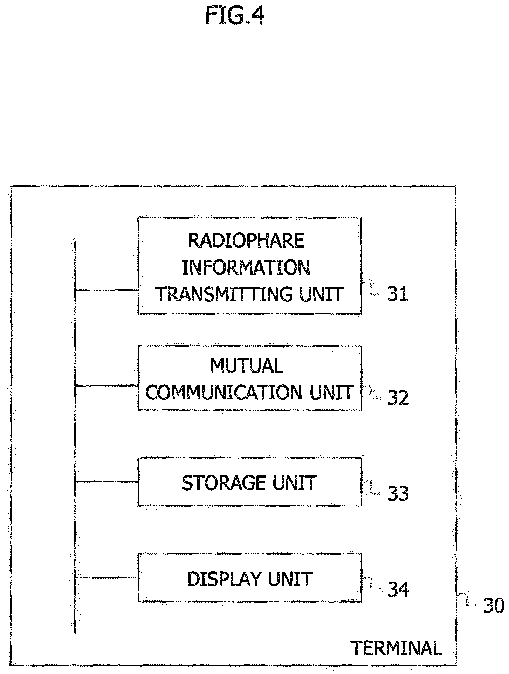

FIG. 4 is a diagram illustrating an example of function blocks of the terminal 30 according to the embodiment. The terminal 30, which is instanced by a smartphone and a computer like a slate PC (Personal Computer), includes a radiophare information transmitting unit 31, a mutual communication unit 32, a storage unit 33, and a display unit 34. Note that the radiophare information transmitting unit 31 and the mutual communication unit 32 are attained based on application software (also called a program) installed in, e.g., the terminal 30 by utilizing the communication function of the terminal 30.

The radiophare information transmitting unit 31 transmits, based on the information retained in the storage unit 33, the radiophare containing the identifying information for identifying the terminal 30 as the beacon 10, and thus gives the proximity notification to the device on the receiving side. The radiophare may contain the day/time information indicating the transmission time. Specifically, the technology such as BLE (Bluetooth Low Energy) may be utilized, and the broadcast communications of the radiophare may be performed. The radiophare (information) containing the identifying information of the terminal 30, which is transmitted by the terminal 30, is receivable by the plurality of beacons.

The mutual communication unit 32 transmits and receives the information bidirectionally to and from other beacons 10, the terminal 30 and the control device 20. For example, the mutual communications may be performed based on the profile instanced by a GATT of the BLE. The mutual communication unit 32 may also perform connection-oriented communications. The mutual communication unit 32, when receiving the specifying information containing pieces of identifying information of other beacons 10, relays the specifying information to the peripheral beacons 10. On the other hand, when receiving the specifying information containing the identifying information identifying the terminal 30 itself, the mutual communication unit 32 stores the specifying information in the storage unit 33, and executes a predetermined process based on the specifying information. The mutual communication unit 32 may, in response to a request given from the control device 20, give a response of the information retained in the storage unit 33 to the control device 20 via the beacon mesh network.

The mutual communication unit 32 receives the radiophare transmitted by the beacon 10, and stores the received radiophare in the storage unit 33. The storage unit 33 is a volatile memory or the nonvolatile memory. For instance, the storage unit 33 is attained by the RAM (Random Access Memory), the ROM (Read Only Memory) and the EEPROM like the flash memory. The mutual communication unit 32 transmits, to the server 40 via the beacon mesh, the radiophare stored in the storage unit 33, the reception day/time of the radiophare and the identifying information for specifying the terminal 30. Note that the identifying information for specifying the terminal 30 may involve using an ID provided by an OS (Operating System) of the smartphone and other equivalent devices, and the server 40 may also issue unique identifying information to the application software of the terminal 30.

The storage unit 33 is attained by, e.g., the HDD (Hard Disk Drive), the SSD (Solid State Drive), the flash memory and other equivalent storages. The storage unit 33 stores the identifying information for identifying the terminal 30, which is sent from the terminal 30. The storage unit 33 stores pieces of positional information indicating the installing locations of the plurality of beacons 10 by being associated with the identifying information (beacon IDs) of the respective beacons.

The display unit 34 displays the positional information and other items of information stored in the storage unit 33 on a monitor provided in the terminal 30.

### <Functional Configuration of Server>

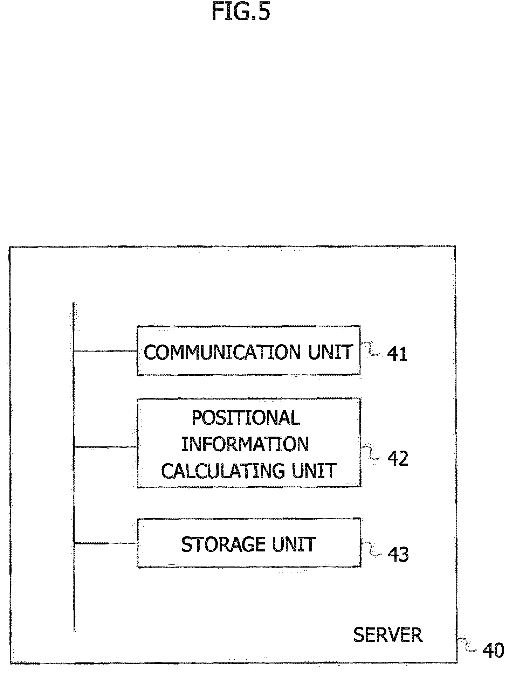

FIG. 5 is a diagram illustrating an example of function blocks of an information providing server 40 according to the embodiment. The server 40, which is, e.g., a desktop computer, includes a communication unit 41, a positional information calculating unit 42 and a storage unit 43. The control device 20 and the server 40 may be configured integrally to operate as one control device.

The communication unit 41 transmits and receives the information to and from the control device 20 and the terminal 50 via the network 60 instanced by the Internet. As described above, the communication unit 41 receives the information containing the identifying information of the terminal 30 from the terminal 30 via the beacon mesh and the control device 20, and stores the received information in the storage unit 43.

The positional information calculating unit 42 calculates, based on the information given from the terminal 30 and containing the identifying information of the terminal 30, the positional information of the terminal 30 by using an existing indoor positioning technology instanced by the tri-circle positioning.

The storage unit 43, which is configured by, e.g., the HDD, the SSD or the flash memory, stores the information received from the terminal 30 via the beacon mesh and the control device 20 and the information indicating the position, calculated based on the received information, of the terminal 30, and may previously store, in addition to these items of information, information on the periphery of the position in which the beacon 10 is installed. The storage unit 43 stores the identifying information (beacon IDs) of the beacons 10 configuring the beacon mesh and the positional information indicating the existing positions of the beacons by being associated with each other.

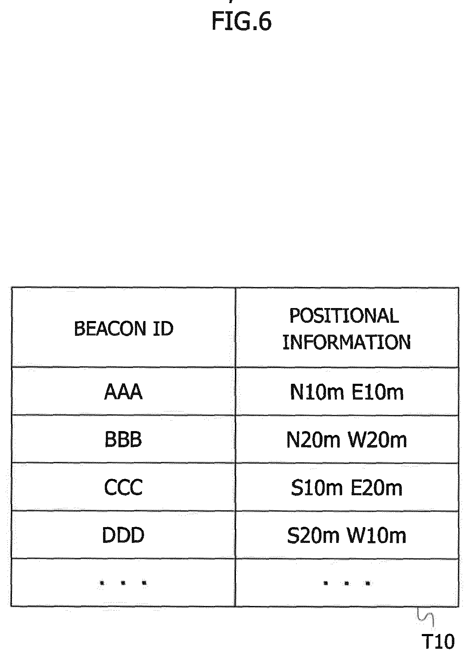

FIG. 6 is a chart illustrating an example of a beacon position table containing the beacon ID and the positional information that are stored in the storage unit 43. In a beacon position table T10 of FIG. 6, the beacon ID defined as the identifying information for identifying each of the beacons 10 is associated with the positional information indicating the existing position of the beacon 10. The positional information is expressed as, e.g., a relative position from a fiducial point. In the beacon position table T10 of FIG. 6, for instance, the positional information "N10m E10m" is associated with the beacon ID "AAA". This represents that the beacon 10 allocated with the beacon ID "AAA" exists in a position that is 10 m in the north (N) and 10 m in the east (E) from the fiducial point. An expression method of the positional information is not limited to this representation. The fiducial point is set in the existing position of, e.g., the control device 20. The positional information may contain information about height.

### <Functional Configuration of Terminal>

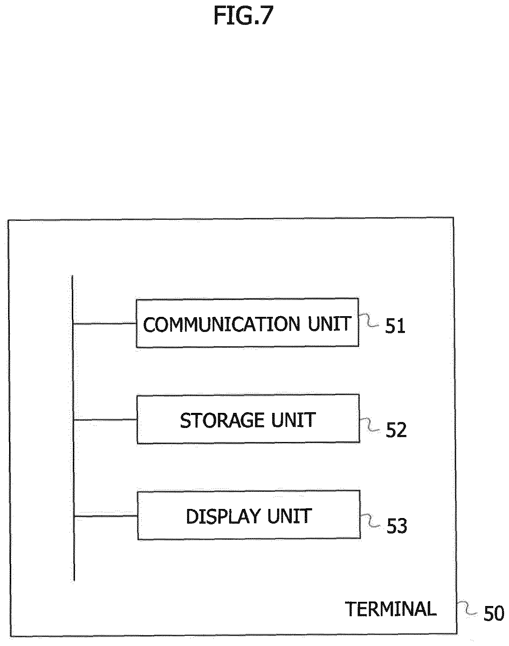

FIG. 7 is a diagram illustrating an example of function blocks of the terminal 50 according to the embodiment. The terminal 50, which is, e.g., the computer, includes a communication unit 51, a storage unit 52 and a display unit 53.

The communication unit 51 transmits and receives the information to and from the server 40 via the network 60 instanced by the Internet. As described above, the communication unit 51 receives the information containing the positional information of the terminal 30 from the server 40, and stores the received information in the storage unit 52.

The storage unit 52, which is configured by the HDD, the SSD or the flash memory, stores the information received from the server 40. The storage unit 52 stores the positional information, received from the server 40, of the terminal 30. The storage unit 52 may store a map covering an area (underground street and other equivalent areas) in which the beacons 10 configuring the beacon mesh are installed.

The display unit 53 displays the positional information, stored in the storage unit 52, of the terminal 30 and other items of information on the monitor provided in the terminal 50.

### <Configuration of Device>

The control device 20, the terminal 30 and the terminal 50 are each attainable by using a dedicated or general-purpose computer instanced by the smartphone, a mobile phone, a tablet terminal, a car navigation system, a PDA (Personal Digital Assistant), a PC (Personal Computer), or an electronic equipment mounted with the computer. The server 40 is attainable by using the dedicated or general-purpose computer instanced by the PC and a Work Station (WS), or the electronic equipment mounted with the computer.

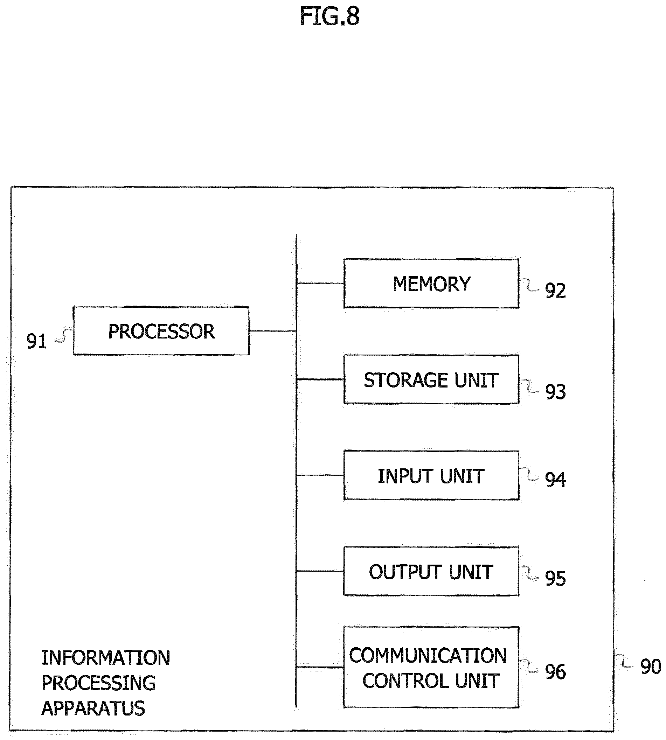

FIG. 8 is a diagram illustrating an example of a hardware configuration of an information processing apparatus. An information processing apparatus 90 illustrated in FIG. 8 has a configuration of the general type of computer. The control device 20, the terminal 30, the server 40 and the terminal 50 are each attained by the information processing apparatus 90 as depicted in FIG. 8. The information processing apparatus 90 includes a processor 91, a memory 92, a storage unit 93, an input unit 94, an output unit 95, and a communication control unit 96. These components are interconnected via a bus. The memory 92 and the storage unit 93 are the non-transitory computer readable recording mediums. The hardware configuration of the information processing apparatus may properly, without being limited to the example illustrated in FIG. 8, omit, replace and add the components.

The processor 91 loads programs stored on the recording medium into a working area of the memory 92, and the configurative units are controlled through running the programs, thereby enabling the information processing apparatus 90 to attain functions matching with predetermined purposes.

The processor 91 is instanced by a CPU (Central Processing Unit) and a DSP (Digital Signal Processor).

The memory 92 includes, e.g., the RAM (Random Access Memory) and the ROM (Read Only Memory) . The memory 92 is also called a main storage device.

The storage unit 93 is instanced by an EPROM (Erasable Programmable ROM), the HDD (Hard Disk Drive) and the SSD (Solid State Drive) . The storage unit 93 may include a removable medium, i.e., a portable recording medium. The removable medium is a disc recording medium exemplified by a USB (Universal Serial Bus) memory or a CD (Compact Disc) and a DVD (Digital Versatile Disc) . The storage unit 93 is also called a secondary storage device.

The storage unit 93 stores various categories of programs, various items of data and various types of tables on the recording medium in a readable/writable manner. The OS (Operating System), the various categories of programs and the various types of tables are stored in the storage unit 93. Information to be stored in the storage unit 93 may also be stored in the memory 92. Information to be stored in the memory 92 may also be stored in the storage unit 93.

The OS is software operating as an intermediary between the software and the hardware, and for managing a memory space, files, processes and tasks. The OS includes a communication interface. The communication interface is a program for transmitting and receiving the data to and from other external devices connected via the communication control unit 96. The external devices embrace, e.g., other information processing apparatuses, external storage devices and other equivalent devices.

The input unit 94 includes a keyboard, a pointing device, a wireless remote controller, a touch panel and other equivalent devices. The input unit 94 may also include a video/image input device instanced by a camera, and a voice/sound input device instanced by a microphone.

The output unit 95 includes a display device instanced by a CRT (Cathode Ray Tube) display, an LCD (Liquid Crystal Display), a PDP (Plasma Display Panel) and an EL Electroluminescence) panel, and an output device instanced by a printer. The output unit 95 may also include a voice/sound output device instanced by a loudspeaker.

The communication control unit 96 establishes connections to other apparatuses and controls communications between the information processing apparatus 90 and other apparatuses. The communication control unit 96 is instanced by a LAN (Local Area Network) interface board, a wireless communication circuit for wireless communications exemplified by Bluetooth (registered trademark), and a communication circuit for telephone communications. The LAN interface board and the wireless communication circuit are connected to a network exemplified by the Internet.

Processors load programs stored in the secondary storage devices into the main storage devices and run the programs, whereby computers, which attain the control device 20, the terminal 30, the server 40 and the terminal 50, implement respective functions. The storage units of the respective devices are provided in storage areas of the main storage devices or the secondary storage devices.

### <Operational Example>

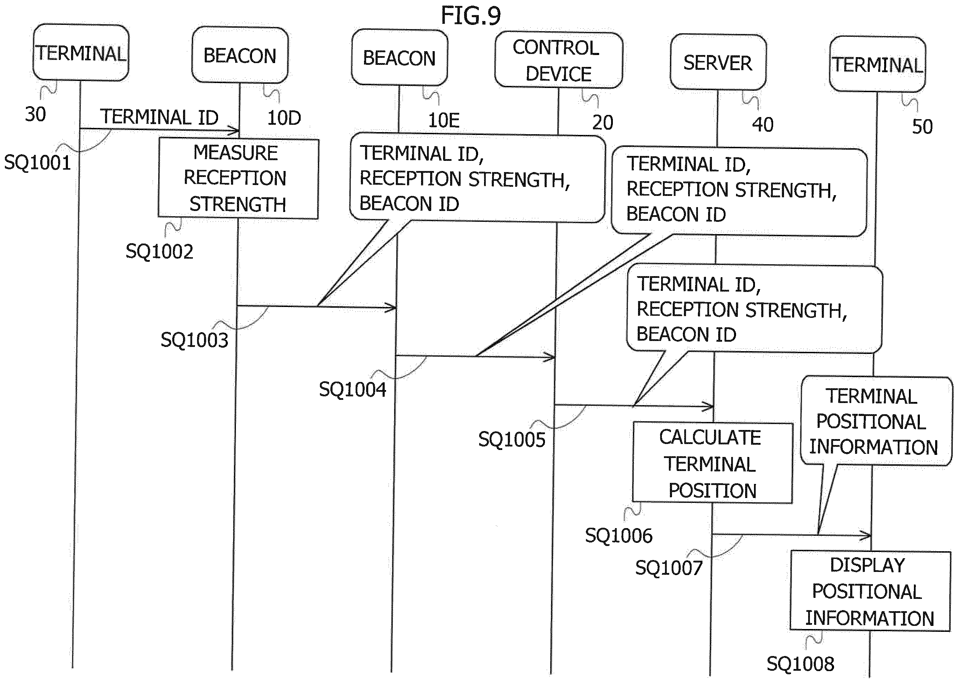

FIG. 9 is a sequence chart illustrating an example of an operation sequence when the server calculates the position of the terminal existing in the vicinity of any one of the beacons configuring the beacon mesh. Herein, in the system as illustrated in FIG. 1, the server 40 calculates the position of the terminal 30. Each beacon 10 is installed in a predetermined space instanced by the underground street. All of the beacons 10 are installed in positions enabling the communications with any other beacons 10. At least one of the beacons 10 is installed in a position enabling notification to the control device 20. The terminal 30 is to exist in a position enabling the terminal 30 to receive the radiophare from at least one of the beacons 10. The terminal 30 is carried by the user or attached to a movable object.

In SQ1001, the terminal 30 transmits a signal containing the terminal ID defined as the information for identifying the terminal itself to the peripheral beacons 10. This signal is, e.g., an advertisement signal. The terminal 30 transmits this signal, e.g., once a second. The terminal 30 is to exist in a position enabling the terminal 30 to receive the radiophare from the beacons 10 configuring the beacon mesh. The signal transmitted from the terminal 30 and containing the terminal ID is receivable by the plurality of beacons 10. Herein, the signal containing the terminal ID from the terminal 30 is to be received by the beacon 10D. The terminal 30 may transmit the signal containing the terminal ID as triggered by receiving the radiophare from any one of the beacons 10 configuring the beacon mesh. The terminal 30 transmits the signal containing the terminal ID at an interval of, e.g., a predetermined time. The terminal 30 may transmit the signal containing the terminal ID as the radiophare of the beacon.

In SQ1002, the beacon 10D receiving the signal containing the terminal ID from the terminal 30 measures the reception strength of the signal (RSSI: Received Signal Strength Indicator) . The RSSI becomes smaller as a distance between the beacon 10D and the terminal 30 gets longer. The RSSI (energy) is proportional to, e.g., a minus square root of the distance. The beacon 10D stores the terminal ID and the reception strength (RSSI) in the storage unit 13 by being associated with each other. The beacon 10D may store the reception time by being associated with the terminal ID and the reception strength.

In SQ1003, the beacon 10D transmits, to the peripheral beacons 10, a signal containing the terminal ID, the reception strength and the beacon ID defined as the identifying information for identifying the beacon 10D, which are stored in the storage unit 13. The beacon ID has values of UUID (8 Bytes), Major (2 Bytes), Minor (2 Bytes). The UUID (Universally Unique Identifier) is used as an identifier for identifying an organization, abuilding, a project and other equivalent objects. The Major is used as an identifier for identifying a group, a floor, a team and other equivalent items within the organization. The Minor is used as an identifier for identifying each individual beacon within the group and other equivalent items . The terminal ID takes, e.g., 2 Bytes. The RSSI takes, e.g., 1 Byte. The signal is transmitted toward the control device 20. The signal may contain identifying information for identifying this signal. The signal may contain identifying information for identifying the control device 20 defined as a destination of the signal. Herein, the signal is to be received by the beacon 10E.

In SQ1004, the beacon 10E transmits the signal received from the beacon 10D toward the beacons 10 peripheral to the beacon 10E. Herein, the signal transmitted from the beacon 10E is to be received by the control device 20. The control device 20 stores the information contained in the signal received from the beacon 10E in the storage unit 23 by being associated with the present time. The transfer of the signal through the beacon mesh is considered to be made at a higher speed than a moving speed of the terminal 30, and hence the present time herein may be deemed to be the same as the time (reception time) when the beacon 10D receives the terminal ID from the terminal 30. The signal containing the terminal ID received by the beacon 10 other than the beacon 10D from the terminal 30 is receivable also by the control device 20. This is because the plurality of beacons 10 possibly exists in the periphery of the terminal 30. In this case, the control device 20 receives the signals containing the terminal ID of the terminal 30 from the plurality of beacons 10. The control device 20 may deem the signals received for a predetermined period and containing the same terminal ID as those based on the signals transmitted from the terminal 30 at the same point of time and containing the terminal ID.

On the other hand, when having received the signal containing the terminal ID from the terminal 30, the beacon 10E likewise measures the reception strength of the signal (RSSI). The beacon 10E stores the terminal ID and the reception strength (RSSI) in the storage unit 13 by being associated with each other. The beacon 10E may also store the reception time by being associated with the terminal ID and the reception strength. Herein, the beacon 10E, when receiving the signal from the beacon 10D, checks whether the signal received from the beacon 10D contains the terminal ID of the terminal 30 with the RSSI being measured by the beacon 10E. When the signal from the beacon 10D contains the terminal ID of the terminal 30 with the RSSI being measured by the beacon 10E, the RSSI (measured by the beacon 10D) of the terminal 30 with the terminal ID being contained in the signal from the beacon 10D is compared with the RSSI, measured by the beacon 10E, of the terminal 30. When the RSSI of the terminal 30 with the terminal ID being contained in the signal from the beacon 10D is larger than the latter RSSI, the beacon 10E transmits the signal received from the beacon 10D toward the beacons 10 peripheral to the beacon 10E. Whereas when the RSSI of the terminal 30 with the terminal ID being contained in the signal from the beacon 10D is smaller than the latter RSSI, the beacon 10E transmits, toward the beacons 10 peripheral to the beacon 10E, a signal configured to rewrite, from the received signal, the beacon ID of the beacon 10D into the beacon ID of the beacon 10E and the RSSI of the beacon 10D into the RSSI measured by the beacon 10E. Herein, the signal transmitted from the beacon 10E is to be received by the control device 20. After the control device 20 has received the signal, the same as what has been described above is applied. With the configuration being thus made, the beacon ID of the beacon 10 measuring the largest RSSI with respect to one terminal 30 is transmitted to the control device 20.

In SQ1005, the control device 20 transmits the signal containing the terminal ID of the terminal 30 stored in the storage unit 23 to the server 40. The control device 20 transmits the signals received for a predetermined period (e.g. , one minute) and containing the terminal ID of the terminal 30 at an interval of the predetermined period to the server 40. The server 40 stores the information contained in the received signals in the storage unit 43.

InSQ1006, the positional information calculating unit 42 of the server 40 calculates a position of the terminal 30 associated with the terminal ID, based on the received terminal ID, the reception strength (RSSI), the beacon ID and the beacon position table T10 stored in the storage unit 43. For example, when one beacon 10 receives the terminal ID from the terminal 30, a distance between this beacon 10 and the terminal 30 is estimated from the reception strength (RSSI), and a position of the beacon 10 is specified from the positional information of the beacon 10. The server 40 is enabled to calculate an approximate position in which the terminal 30 exists from the position of the beacon 10 and the distance between the beacon 10 and the terminal 30. The plurality of beacons 10 receives the terminal ID from the terminal 30, in which case it is feasible to calculate the existing position of the terminal 30 by the tri-circle positioning and other equivalent positioning methods from the positions of the respective beacons 10 and the respective reception strengths (RSSIs). The server 40 stores the calculated position of the terminal 30 associated with the terminal ID in the storage unit 43 by being associated with this terminal ID. The position of the terminal 30 is expressed as, e.g., a relative position from the fiducial point. The server 40 may also calculate a moving speed of the terminal 30 from the positional information of the terminal 30 and the reception time in the past, and from the positional information of the terminal 30 and the reception time at the present.

In SQ1007, the server 40 transmits the calculated positional information of the terminal 30 to the terminal 50. The server 40 may also transmit the reception time of the terminal ID in the beacon together with the positional information to the terminal 50. The terminal 50 stores the received positional information of the terminal 30 in the storage unit 52.

In SQ1008, the display unit 53 of the terminal 50 displays the existing position of the terminal 30 on the monitor of the terminal 50, based on the positional information, to be stored in the storage unit 52, of the terminal 30. The terminal 50 may also display the existing position of the terminal 30 by being superposed on the map of the area in which the beacons 10 configuring the beacon mesh exist. This configuration enables the existing position of the terminal 30 to be checked on the terminal 50. The existing position of the terminal 30 indicates a position of the user when the user carries the terminal 30, and indicates a position of the object when the terminal 30 is attached to the object.

### <Modified Example 1>

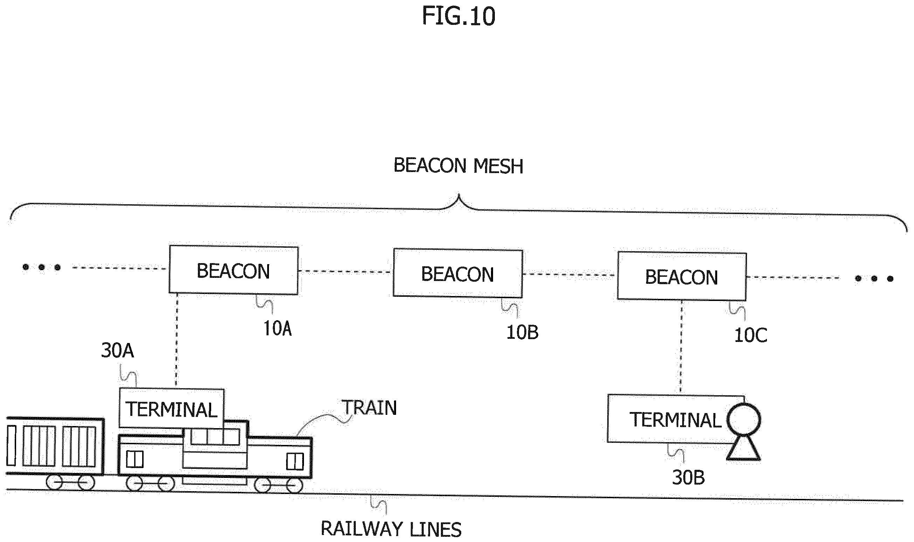

FIG. 10 is a diagram illustrating an example of a configuration of the system according to a modified example 1. The system according to the modified example 1 includes the beacons 10 (the beacons 10A through 10C in FIG. 10), a terminal 30A, and a terminal 30B. The beacons 10 configure the beacon mesh. The number of the beacons is not limited to "3". The system according to the modified example 1 is attained within, e.g. , a railway tunnel. The beacons 10 are aligned along railway lines at a predetermined interval within the tunnel. The terminal 30A is mounted in, e.g., a train. The terminal 30A may also be carried by a motorman of the train. The position of the terminal 30A corresponds to a position of the train. The terminal 30B is carried by the user instanced by a worker working, e.g., at the railway lines. Each beacon 10 is installed in a position enabling the communications with the adjacent beacons 10. Described herein is a method of notifying the user carrying the terminal 30B where the train mounted with the terminal 30A is positioned. The beacon 10 in the modified example 1 has the same configuration as the beacon 10 described above has. Each of the terminals 30A and 30B in the modified example 1 has the same configuration as the terminal 30 described above has. Different portions from the aforementioned beacon 10 and terminal 30 will be described later.

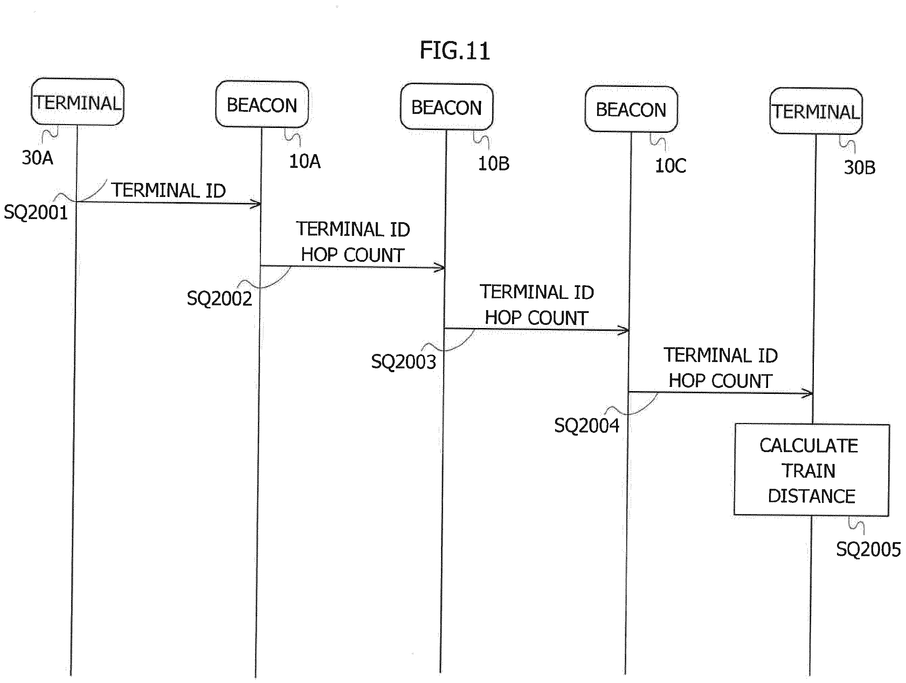

FIG. 11 is a sequence chart illustrating an example of an operation sequence when the terminal carried by the user calculates a distance to the terminal mounted in the train within the tunnel in which the beacons are installed. Herein, the terminal 30B carried by the user calculates the position of the terminal 30A mounted in the train in the system as depicted in FIG. 10. The beacons 10 are aligned in a space instanced by the tunnel. All of the beacons 10 are installed in the positions enabling the communications other adjacent beacons 10. The terminal 30A and the terminal 30B are to be capable of receiving the radiophare from at least one beacon 10. Herein, an assumption is that the terminal 30A exists in the vicinity of the beacon 10A, and the terminal 30B exists in the vicinity of the beacon 10C.

In SQ2001, the terminal 30A mounted in the train existing within the tunnel in which the beacons are installed transmits the signal containing the terminal ID as the information for identifying the terminal 30A itself to the vicinal beacons 10. The signal transmitted from the terminal 30A and containing the terminal ID is receivable by at least one beacon 10. Herein, the signal transmitted from the terminal 30A and containing the terminal ID is to be received by the beacon 10A. The beacon 10Astores the information of the received signal in the storage unit 13. The terminal 30A may also transmit the signal containing the terminal ID as triggered by receiving the radiophare from any one of the beacons 10 configuring the beacon mesh. The terminal 30A transmits the signal containing the terminal ID at an interval of, e.g., a predetermined time. The terminal 30A may transmit the signal containing the terminal ID as the radiophare of the beacon.

In SQ2002, the beacon 10A transmits the signal containing the terminal ID stored in the storage unit 13 and the hop count to other adjacent beacons 10. The hop count indicates how many times the signal is transferred from the beacon 10 to the beacon 10. Herein, the hop count is set to "0". The signal is transmitted toward the terminal 30B but may not be specified in terms of its destination. The signal may not contain the identifying information for identifying this signal. Herein, this signal is to be received by the beacon 10B. The beacon 10B stores the information (the terminal ID and the hop count) of the received signal in the storage unit 13 of the beacon 10B.

In SQ2003, the beacon 10B transmits the signal containing the terminal ID stored in the storage unit 13 and the hop count toward the beacons 10 adjacent to the beacon 10B. Herein, the beacon 10B adds "1" to the hop count before the transmission. A reason why the beacon 10B adds "1" is that the terminal ID stored in the storage unit 13 is transferred between the beacon 10Aand the beacon 10B. Herein, the signal transmitted from the beacon 10B is to be received by the beacon 10C. The beacon 10C stores the information contained in the signal received from the beacon 10B in the storage unit 13 of the beacon 10C.

In SQ2004, the beacon 10C transmits the terminal ID stored in the storage unit 13 and the hop count toward the beacons 10 adjacent to the beacon 10C. Herein, the beacon 10C adds "1" to the hop count before the transmission. Herein, the signal transmitted from the beacon 10C is to be received by the terminal 30B. the terminal 30B stores the information contained in the signal received from the beacon 10C in the storage unit 33 of the terminal 30B.

In SQ2005, the terminal 30B calculates, based on the terminal ID and the hop count, a distance to the terminal 30A associated with the terminal ID. The beacons 10 are aligned at the predetermined interval, and it is therefore possible to calculate the distance to the terminal 30A from the terminal 30B by multiplying the hop count by a predetermined distance. Distances between the beacons 10 are stored beforehand in the storage unit 33 of the terminal 30B. The terminal 30B displays the calculated distance to the terminal 30A on the monitor of the terminal 30B. The terminal 30B may output an alarm sound from the loudspeaker and other equivalent devices when the distance to the terminal 30A is equal to or shorter than a predetermined distance determined to be hazardous. This contrivance enables the user (e.g., the worker at the railway lines) carrying the terminal 30B to be notified of a close approach of the train. The beacon mesh is installed, and the user of the terminal 30B is thereby enabled to always grasp the distance to the train mounted with the terminal 30A even in an area such as within the tunnel that is hard to receive the radio waves of a mobile phone network and a GPS (Global Positioning System) and other equivalents. The terminal 30B is enabled to grasp the distance to the terminal 30A with a small number of items of information (the terminal ID and the hop count) . The terminal 30A transmits the terminal ID at the interval of the predetermined time, whereby the terminal 30B is enabled to grasp the distance to the terminal 30A at the interval of the predetermined time. The terminal 30B knows time-variations of the distance and is thereby enabled to calculate the moving speed of the terminal 30A and to calculate an arrival time of the terminal 30A from the moving speed and the distance. The terminal 30B may output these items of information onto the monitor. The terminal ID is transmitted from the terminal 30B, whereby the terminal 30A is likewise enabled to grasp the distance to the terminal 30B. Even when the terminal 30A and the terminal 30B exist in whichever positions within the tunnel, it is feasible to calculate the distance between the terminal 30A and the terminal 30B.

### <Modified Example 2>

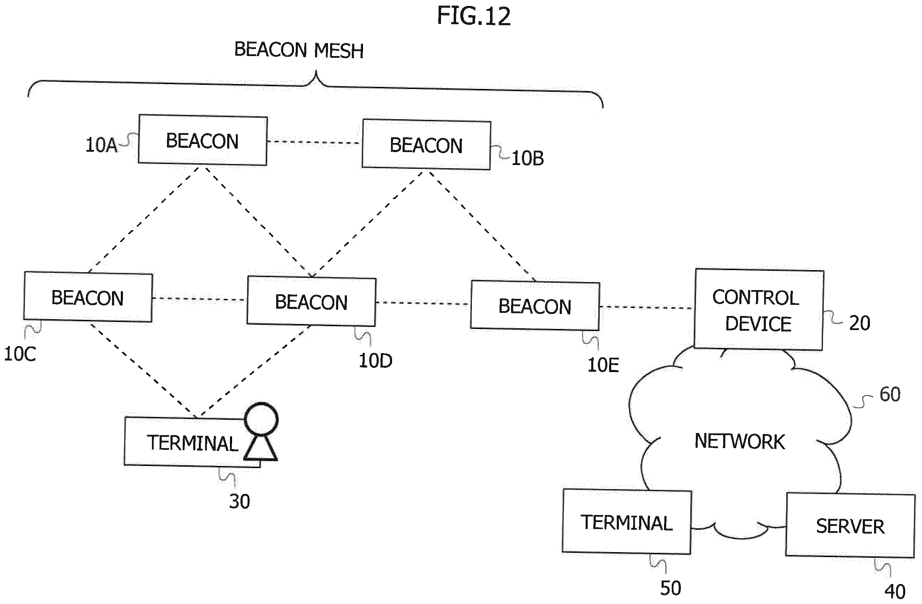

FIG. 12 is a diagram illustrating an example of a configuration of the system according to a modified example 2. The system according to the modified example 2 includes the beacons 10 (the beacons 10A through 10E in FIG. 12) and the terminal 30. The beacons 10 configure the beacon mesh. The number of the beacons is not limited to "5". The terminal 30 is carried by, e.g., the user. The respective beacons 10 are installed in the positions enabling the communications with the adjacent beacons 10. The beacon 10 in the modified example 2 has the same configuration as the beacon 10 described above has. The terminal 30 in the modified example 2 has the same configuration as the terminal 30 described above has. Different portions from the aforementioned beacon 10 and terminal 30 will be described later.

Herein, each of the beacons 10 transmits the advertisement signal at an interval of predetermined time (e.g. , per 100 ms). The advertisement signal is a signal containing the beacon ID of the beacon 10 transmitting the advertisement signal. The beacon ID has values of UUID, Major, and Minor. The terminal 30 intermittently (e. g. , for 3 sec per 1 min) receives the advertisement signals from the beacons 10 (e.g., the beacon 10C and the beacon 10D) . The terminal 30 measures the reception strength (RSSI) of the advertisement signal. The terminal 30, when receiving the advertisement signals from the plurality of beacons 10 for the same reception period, measures the RSSIs of the respective signals. The terminal 30 extracts the beacon 10 exhibiting the highest RSSI, and transmits the signal containing the beacon ID of this beacon 10 and the terminal ID of the terminal 30 towards the beacons 10. This signal may contain the highest RSSI. The beacon 10 receiving this signal transfers the received signal toward the control device 20.

The control device 20 stores the information contained in the signal received from the beacon 10 in the storage unit 23 by being associated with the present time. The control device 20 transmits, to the server 40, the signal containing the terminal ID and other equivalent items of the terminal 30, which are stored in the storage unit 23. The control device 20 transmits, e.g., the signal received for the predetermined period and containing the terminal ID of the terminal 30 to the server 40 at the interval of the predetermined period. The server 40 stores the information contained in the received signal in the storage unit 33. The positional information calculating unit 42 of the server 40 calculates the position of the terminal 30 associated with the terminal ID on the basis of the received terminal ID, the reception strength (RSSI), the beacon ID and the beacon position table T10 stored in the storage unit 43.

### <Modified Example 3>

A configuration of the system according to a modified example 3 is the same as the configuration (FIG. 12) of the system according to the modified example 2. Each of the beacons 10 transmits the advertisement signal at the interval of predetermined time (e.g. , per 100 ms). The advertisement signal is a signal containing the beacon ID of the beacon 10 transmitting the advertisement signal. The beacon ID has values of, e.g., UUID, Major, and Minor. The terminal 30 intermittently (e.g., for 3 sec per 1 min) receives the advertisement signals from the beacons 10 (e.g., the beacon 10C and the beacon 10D). The terminal 30 measures the reception strength (RSSI) of the advertisement signal. The terminal 30, when receiving the advertisement signals from the plurality of beacons 10 for the same reception period, measures the RSSIs of the respective signals. The terminal 30 extracts the beacon 10 exhibiting the highest RSSI, and transmits the signal containing the beacon ID of this beacon 10 towards the beacons 10.

An assumption is herein that the beacons 10 are previously allocated to respective bits of bit fields (data fields) of the signals transmitted toward the control device 20 from the beacons 10. The server 40 and other equivalent devices are to previously store a table configured to associate the beacon IDs of the beacons 10 with bit addresses. This table may also be stored in the terminal 30, the beacon 10 and the control device 20. Each beacon 10 may store the bit address allocated to the beacon itself in place of the table described above. For example, when the bit field has 10 Bytes (80 bits), up to 80 beacons are allocated to the respective bits of the bit field.

The beacon 10 receiving the signal containing the beacon ID of the beacon 10 exhibiting the highest RSSI from the terminal 30 sets, to "1", a value of the bit having the address associated with the beacon ID contained in the received signal in the bit field of the signal transmitted toward the control device 20. A meaning of the bit value being "1" is that the terminal 30 exists in the periphery of the beacon 10 associated with this bit. A meaning of the bit value being "0" is that the terminal 30 does not exist in the periphery of the beacon 10 associated with this bit. The beacon 10 transmits the signal concerned toward the control device 20. Each of the beacons 10 receiving this signal transfers the received signal toward the control device 20. The beacon 10, when receiving the signal containing the beacon ID of the beacon 10 exhibiting the highest RSSI from the terminal 30, sets, to "1", a value of the bit having the address associated with the beacon ID contained in the signal received from the terminal 30 in the bit fields of the signals received from other beacons 10, and transfers the signal with the bit value being set to "1" toward the control device 20.

The control device 20 stores the information contained in the signal received from the beacon 10 in the storage unit 23 by being associated with the present time. The control device 20 transmits, to the server 40, the signal containing the bit field associated with the beacon 10 stored in the storage unit 23. The control device 20 transmits, e.g. , the signal containing the bit field associated with the reception beacon 10 to the server 40 at the interval of a predetermined period (e.g., 1 min). The server 40 stores the information contained in the received signal in the storage unit 33. The positional information calculating unit 42 of the user equipment 40 detects the existing position of any one of the terminals 30, based on the information of the received bit field and the table configured to associate the beacon ID of the beacon 10 with the bit address, the table being stored in the storage unit 43. In the bit field, the value "1" is registered in the existing position of any one of the terminals 30, while "0" is registered in a non-existing position. Notification as to whether the terminal 30 exists in terms of the bit field is made, thereby enabling a reduction in data size transferred and received between the beacons 10.

### (Operation and Effect of Embodiment)

In the system according to the embodiment, the terminal 30 transmits the terminal ID toward the beacons 10 in the existing area of the beacons 10 configuring the beacon mesh. The beacon 10 receiving the terminal ID transmits the terminal ID toward the control device 20. The server 40 receiving the terminal ID from the control device 20 and the information of the beacon 10 receiving the terminal ID, calculates the position of the terminal 30 associated with the terminal ID on the basis of the position of the beacon 10 receiving the terminal ID and the reception strength (RSSI) thereof. In the system according to the embodiment, the beacons 10 are installed to configure the beacon mesh in the space instanced by the underground street and the tunnel in which the communication environment is not sufficiently set up, thereby enabling the position of the terminal 30 to be grasped.

The present invention is not limited to the embodiment discussed above, and embodiments may be varied and combined within a range that does not deviate from the gist of the present invention.

### <Non-Transitory Computer Readable Recording Medium>

A programmaking a computer, other machines and apparatuses (which will hereinafter be referred to as the computer and other equivalents) attain any one of the functions, can be recorded on a non-transitory recording medium readable by the computer and other equivalents. The computer and other equivalents are made to read and run the program on this non-transitory recording medium, whereby the function thereof can be provided.

Herein, the non-transitory recording medium readable by the computer and other equivalents connotes a non-transitory recording medium capable of accumulating information instanced by data, programs and other equivalents electrically, magnetically, optically, mechanically or by chemical action, which can be read from the computer and other equivalents. In such a non-transitory recording medium, computer building components instanced by the CPU and the memory are provided, and the CPU thereof may be made to run the program.

Among these non-transitory recording mediums, the mediums removable from the computer and other equivalents are exemplified by a flexible disc, a magneto-optic disc, a CD-ROM, a CD-R/W, a DVD, a DAT, an 8 mm tape, and a memory card.

A hard disc, a ROM and other equivalents are given as the non-transitory recording mediums fixed within the computer and other equivalents.

### [Brief Description of Reference Numerals and Symbols]

- 10: beacon
- 11: radiophare information transmitting unit
- 12: mutual communication unit
- 13: storage unit
- 20: control device
- 21: beacon communication unit
- 22: information acquiring unit
- 23: storage unit
- 30: terminal
- 31: radiophare information transmitting unit
- 32: mutual communication unit
- 33: storage unit
- 34: display unit
- 40: server
- 41: communication unit
- 42: positional information calculating unit
- 43: storage unit
- 50: terminal
- 51: communication unit
- 52: storage unit
- 53: display unit
- 60: network

## Claims

1. A position calculating method in a system including: a plurality of beacons enabled to perform mutual communications within a predetermined radio wave reachable distance and transmitting radiophares containing self-identifying information, each of the plural beacons being disposed within the radio wave reachable distance of at least one of other beacons; and a control device enabled to perform the communications with at least one of the plural beacons, the method comprising:
causing at least one of the plural beacons to receive a first signal containing terminal identifying information for identifying a terminal from the terminal existing within the radio wave reachable distance of the beacon, to measure a reception strength of the received signal, and to transmit a second signal containing the terminal identifying information, the reception strength, and beacon identifying information for identifying the beacon; and
causing the control device to receive the second signal from one of the plural beacons, and to calculate the position of the terminal associated with the terminal; identifying information contained in the second signal, based on positional information of the beacon associated with the beacon identifying information contained in the second signal and a reception strength contained in the second signal.

2. A distance calculating method in a system including: a plurality of beacons enabled to perform mutual communications within a predetermined radio wave reachable distance and transmitting radiophares containing self-identifying information, the respective plural beacons being aligned at a predetermined interval within the radio wave reachable distance of at least one of other beacons, the method comprising:
causing at least one of the plural beacons to receive a first signal containing terminal identifying information for identifying a first terminal from the first terminal existing within the radio wave reachable distance of the beacon, and to transmit a second signal containing the terminal identifying information and a hop count indicating a number of transfers made between the beacons;
causing one of the plural beacons to transmit, when receiving the second signal, the second signal as a renewed second signal by adding "1" to the hop count contained in the second signal; and
causing a second terminal existing within the radio wave reachable distance of one of the plural beacons to calculate, when receiving the second signal, a distance to the first terminal associated with the terminal identifying information contained in the second signal by multiplying the hop count contained in the second signal by the predetermined interval.

3. A beacon enabled to perform communications with other beacons with a predetermined radio wave reachable distance, transmitting a radiophare containing self-beacon identifying information, and disposed within the radio wave reachable distance of at least one of other beacons, the beacon comprising:
a communication unit to receive a first signal containing terminal identifying information for identifying a terminal from the terminal existing a predetermined radio wave reachable distance, to measure a reception strength of the first signal, and to transmit a second signal containing the terminal identifying information, the reception strength and the beacon identifying information.
